# EUROPEAN PATENT SPECIFICATION

(11) **EP 0 535 861 B1**
(45) Date of publication and mention of the grant of the patent: **18.02.1998**
(21) Application number: 92308692.0
(22) Date of filing: 24.09.1992
(51) Int. Cl.: G02B 6/12, C03C 17/04, C04B 41/86

(54) **Method for making planar optical waveguides**
Verfahren zur Herstellung von planaren optischen Wellenleitern
Procédé pour la fabrication des guides d'onde plans optiques

(30) Priority: 30.09.1991 US 768506
(43) Date of publication of application: 07.04.1993
(73) Proprietor: AT&T Corp., New York, NY 10013-2412 (US)
(72) Inventor: Bhandarkar, Suhas Dattatreya, Murray Hill, New Jersey 07974 (US); MacChesney, John Burnette, Lebanon, New Jersey 08833 (US)
(74) Representative: Johnston, Kenneth Graham

(56) References cited:
- WO-A-92/00189
- FR-A- 2 089 594
- US-A- 3 934 061

## Description

### Field of the Invention

This invention relates to methods of making planar optical devices, such as waveguides.

### Background of the Invention

With the rapid proliferation of fiber optic communications systems, devices for processing optical signals have become increasingly important. Planar devices comprising optical waveguides fabricated on planar substrates offer a promising environment for receiving and processing signals from optical fibers. Such devices ultimately offer the potential of integrated optical and electronic signal processing on a single semiconductor substrate.

A typical proposal for planar optical devices involves disposing high silica optical wave guiding structures on silicon substrates. But while high silica glass is suitable for use in optical fiber, it is not optimal for use on silicon. High silica glass is refractory, has a poor thermal expansion match with silicon, requires a long deposition time, and is a poor host for the rare earth dopants contemplated for a number of device applications.

The refractory nature of high silica glass means that high temperatures are generally required to produce an optical waveguide. For example, in the flame hydrolysis method for depositing a high silica core, the deposited particulates are typically sintered at 1200°C or more. Such temperatures would deteriorate electronic devices formed in the underlying silicon.

Other techniques for depositing high silica glass layers tend to be unduly time consuming. For example, chemical vapor deposition grows only fractions of a micrometer of high silica glass per hour, and high pressure oxidation of silica on silicon typically requires up to 30 hours to generate 15 micrometers. Accordingly, there is a need for an improved method of making planar waveguide devices.

FR-A-2 089 594 discloses a method of making a multilayer planar optical device, the method comprising a step in which a particulate layer of glass is consolidated by viscous sintering.

### Summary of the Invention

Methods are as claimed in claims 1 and 11. A planar waveguide device is thus fabricated by providing a substrate with an undercladding, depositing a particulate layer of core glass on the undercladding, consolidating the particulate layer by low temperature viscous sintering, patterning the consolidated layer to form an optical waveguide and applying an overcladding. The glass layers can be deposited quickly and economically by slurry dipping, centrifuging or electrophoresis. In a preferred embodiment the substrate is silicon, and the core glass is sodium-boro-silicate.

### Brief Description of the Drawing

The advantages, nature and various additional features of the invention will appear more fully upon consideration of the illustrative embodiments now to be described in detail in connection with the accompanying drawings. In the drawings:
FIG. 1 is a flow diagram showing the preferred process steps used to make a planar optical device;
FIG. 2 shows schematic cross sections of a planar optical device at various steps in the process of FIG. 1;
FIG. 3 is a graphical illustration showing the thickness of an unconsolidated, slurry-dipped layer as a function of the loading of particulates in the slurry;
FIG. 4 is a graphical illustration showing, for several values of sol loading, the thickness of a consolidated electrophoresis deposited layer as a function of applied voltage;
FIG. 5 shows schematic plan views in elevation of various exemplary configurations in which the device of FIG. 2 can be employed.

It is to be understood that these drawings are for purposes of illustrating the concepts of the invention and, except for graphical illustrations, are not to scale.

### Detailed Description

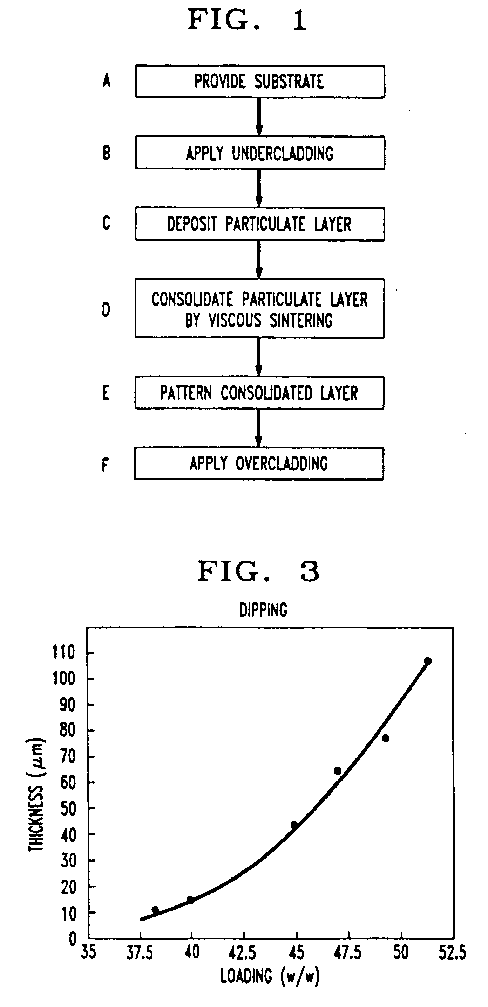

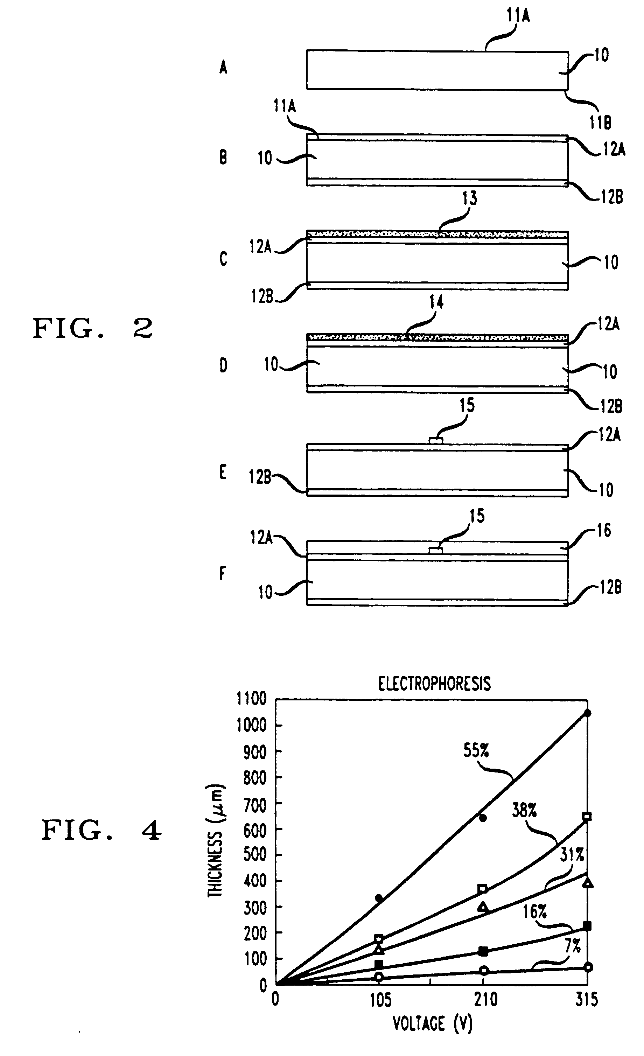

Referring to the drawings, FIG. 1 illustrates the steps in making a planar optical device, and FIG. 2 shows schematic cross sections of a preferred device at various steps in the process of FIG. 1.

As shown in FIG. 1A, the first step is to provide a substrate (10 of FIG. 2). The substrate 10 is preferably a semiconductor, such as monocrystalline silicon, and it preferably has a pair of substantially planar major surfaces 11A and 11B. Alternatively the substrate can be ceramic or glass.

The second step, shown in FIG. 1B is to apply to the major surface 11A a layer of undercladding glass 12A. Preferably for a silicon substrate, the undercladding 12A is high silica glass applied by subjecting the substrate to oxygen at elevated pressure and temperature. Preferably layer 12A is grown by high pressure steam oxidation at a steam pressure of 25 p.s.i. and a temperature of 1050°C. Advantageously layer 12A can be 10-20 micrometers in thickness, and preferably a layer 12B of the same glass at equal thickness is applied to surface 11B in order to prevent warping from thermal mismatch. Advantageously the undercladding layer has a coefficient of thermal expansion approximately equal to or lower than that of the substrate. If the substrate is comprised of undercladding glass, the second step is, of course, not required.

As shown in FIG. 1C, the next step is to deposit over layer 12A a layer 13 of core glass particulates. Preferably the core glass particulates predominantly comprise small particles having diameters less than about a micron. Advantageously the particles have a log normal size vs. weight distribution curve with a mean at about 0.2 micrometers. As a preliminary step, a supply of such particles can be obtained by finely grinding the glass, dispersing the ground particles in liquid, and fractionating the particles by size using a centrifuge.

Useful core glass compositions for single mode waveguides have an index of refraction approximately 0.5% to to 0.7% higher than that of the cladding layer 12A and a coefficient of thermal expansion approximately the same as that of the substrate 10. For multimode cores the index of refraction is 1 to 3% higher than the cladding. Preferred core compositions for silicon substrates are sodium boro-silicates such as Corning 7740 and 7070. Coming 7740 comprises by weight: 81% SiO₂, 13% B₂O₃, 4% Na₂O, 2% Al₂O₃. It has an index of refraction 1.469 and a coefficient of thermal expansion 32. 5 x 10⁻⁷ /°C as compared with 35 x 10⁻⁷ /°C for silicon. Corning 7070 comprises of 71 % SiO₂, 26% B₂O₃, 2% Na₂O and 1% Al₂O₃. It has an index of 1.475 and a coefficient of 32 x 10⁻⁷ /°C.

The layer of particulate core glass can be deposited in any of several ways including slurry dipping, centrifuging or electrophoresis. Slurry dipping involves forming a homogeneous slurry of particulates in a liquid such as butyl alcohol, dipping the workpiece in the liquid, and allowing the deposited layer to dry. As graphically illustrated in FIG. 3, the thickness of the resulting particulate layer is a function of the loading, i.e. the ratio of the weight of the suspended particulates to the weight of the slurry. The resulting particulate layer is about 40% of the theoretical density.

Centrifuging, which involves disposing the substrate within a liquid suspension of particles and driving the particles against the substrate by centrifugal motion, produces a higher density particulate layer approaching 60% of the theoretical density. Preferably centrifuging is effected at about 4000 r.p.m. to effect acceleration of 3200g for a time of 5-10 minutes.

Electrophoresis involves a preliminary step applying a sacrificial conductive layer, such as 1000 angstroms of aluminum, on layer 12A, disposing the workpiece in a polar liquid containing the particulate, and applying a positive voltage to the aluminum layer vis a vis a cathode in the liquid. Particles migrate to the substrate. As shown in FIG. 4, for times in excess of about 30 seconds the deposited thickness is a function of sol loading and applied voltage, V. Preferred conditions are V = 300 volts, current I = 100 mA and interelectrode distance D = 2 cm. The resulting particulate layer achieves about 70% of the theoretical density, and with subsequent thermal processing the aluminum is diffused into the adjacent glass layers.

FIG. 1D shows the fourth step is consolidation of the particulate layer 13 (FIG. 2C) by low temperature viscous sintering to form consolidated layer 13 (FIG. 2D). Viscous sintering involves heating the workpiece to a temperature under the softening point to achieve a surface-driven consolidation of the particulate material. In contrast with conventional techniques which typically require high temperatures of 1200°C or more to eliminate the bubbles from the core glass, viscous sintering can achieve consolidation of a particulate layer at temperatures below the softening point as low as 850°C-950°C. Preferably this consolidation is effected at a temperature in the range T_{G} to T_{G} + 100°C in a furnace within the ambience of an inert gas, such as helium. For sodium-borosilicate glass the preferred firing schedule is (1) 550°C in 0₂ for one hour to burn out any organic materials, (2) cool to room temperature, (3) from room temperature in He to 600°C in two hours, and (4) from 600°C in He with 2% 0₂ to 950°C in twenty-four hours to effect viscous sintering, and (5) furnace cooling to room temperature.

The desired thickness for consolidated layer 14 depends on the intended use of the device. For multimode optical waveguides the thickness is typically in the range 15-50 micrometers. For single mode waveguides, typically 3-8 microns.

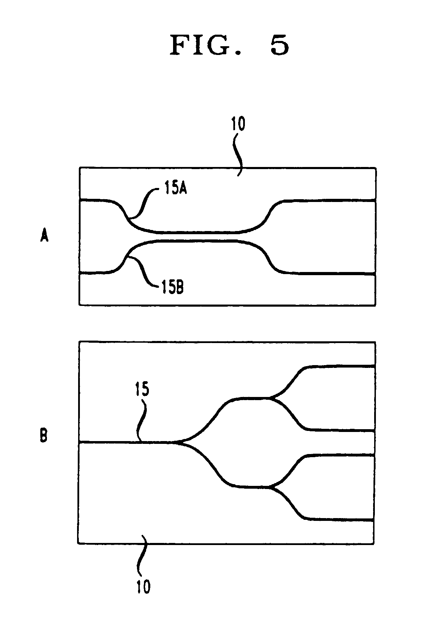

The next step, shown in FIG. 1E, is patterning the consolidated layer into a waveguiding structure (15 of FIG. 2E). This can be accomplished by conventional photolithographic processes using 50% HF diluted 10:1 as the etchant. The shape of the pattern depends on the intended use of the device. Typically optical waveguide cores are substantially square in transverse cross section, but diffusion at high temperature will produce desired rounding. Exemplary longitudinal configurations of waveguide structures for use as couplers and beam splitters are shown in FIGS. 5A and 5B, respectively.

As an alternative to patterning by etching the core glass, if the core is deposited by electrophoresis, the sacrificial aluminum layer can be patterned prior to the electrophoresis deposition step. The core glass particulates will deposit only on the patterned aluminum.

FIG. 1F shows the final step which is application over the structure 15 of overcladding glass layer 16. Layer 16 has an index of refraction lower than waveguide 15 and a thickness of 10-15 micrometers. Preferably layer 16 is of the same high silica glass of which layer 12 is composed. Advantageously layer 16 is applied by slurry dipping followed by consolidation as described above. The resulting structure acts as an optical waveguide.

It is contemplated that even greater advantages in fabrication can be achieved by using for the cladding layers 12A and 16 a sodium borosilicate glass having an index of refraction lower than the core. In this instance both the undercladding layer and the overcladding can be deposited as particulates and consolidated by viscous sintering as described for the core.

The described method and resulting device have several significant advantages over conventional methods and devices. Foremost, the waveguide structure 15 as well as the cladding are deposited and consolidated rapidly and at a relatively low temperature. Moreover, the preferred waveguide structure of sodium borosilicate is thermally compatible with silicon and serves as an excellent host to rare earth dopants.

FIG. 5 shows schematic top views of two optical circuit elements using the planar waveguide structure of FIG. 2. For example, FIG. 5A illustrates a simple optical directional coupler comprising a waveguide structure comprising two cores 15A and 15B formed and disposed as described within cladding (not shown) on a substrate 10. The cores are patterned to approach within a few microns of each other to define an interaction region wherein light from one core is coupled onto the other. For 2-3 micrometer spacing, typical interaction lengths for 100% coupling are 2-4 micrometers for wavelengths in the range 1.29 to 1.55 micrometers.

FIG. 5B illustrates a simple optical beam splitter useful for branching and combining optical signals. Here, what is initially a single waveguide is patterned to repeatedly branch into a plurality of guides. In one direction the device operates as a beam splitter. In the reverse direction it can combine several beams. Conveniently, the structures of FIGS. 5A and 5B can be provided with optical fiber guiding grooves (not shown) in accordance with techniques well known in the art, for aligning optical fibers with the cores 15.

It is to be understood that the above-described embodiments are illustrative of only a few of the many possible specific embodiments which can represent applications of the principles of the invention. For example, FIG. 5 illustrates only two of many possible optical circuit elements which can be made using the guiding structure disclosed in FIG. 2. Other optical circuit elements into which the guiding structure can be patterned include straight waveguides, curvatures X-crosses, optical switches and Y-branches. Moreover, while the method has been described in connection with an exemplary silicon substrate, and sodium borosilicate core, the method can be used with other types of substrates and glasses, such as stainless steel in conjunction with fluoride, phosphate or flint glasses. Numerous and varied other arrangements can be readily devised in accordance with these principles by those skilled in the art without departing from the scope of the invention which is as defined by the claims.

## Claims

1. A method of making a planar optical device comprising the steps of
providing a substrate (10),
disposing on the substrate a layer of glass to act as undercladding;
disposing over the undercladding a particulate layer (13) of glass having an index of refraction greater than that of the undercladding;
consolidating the particulate layer by viscous sintering;
patterning the consolidated layer to define an optical waveguide core;
disposing on the patterned core a layer of glass (16) to act as an overcladding having an index of refraction lower than the core.

2. The method of claim 1 wherein said undercladding is disposed on said substrate by depositing a layer of glass particles and consolidating the undercladding particulate layer by viscous sintering.

3. The method of claim 1 wherein said particulate layer is disposed over said undercladding by contacting the undercladding with a slurry containing glass particulates.

4. The method of claim 1 wherein said particulate layer is disposed over said undercladding by centrifuging.

5. The method of claim 1 wherein said particulate layer is disposed over said undercladding by electrophoresis.

6. The method of claim 1 wherein said particulate layer is a glass having a characteristic temperature T_{G} and said sintering is effected at a temperature in the range T_{G} to T_{G} + 100°C.

7. The method of claim 1 wherein:
said substrate comprises silicon;
said undercladding is high silica glass;
said core comprises sodium borosilicate glass; and
said overcladding comprises high silica glass.

8. The method of claim 1 wherein said overcladding is disposed on said patterned core by contacting the patterned core with a slurry containing glass particulates.

9. The method of claim 1 wherein said particulate layer predominantly comprises glass particulates having diameters less than a micron.

10. The method of claim 1 wherein said substrate comprises monocrystalline silicon, said undercladding layer of glass is provided by growing a layer of high silica glass on said substrate, said particulate layer predominantly comprises particles of sodium borosilicate glass having diameters less than one micron, and said viscous sintering step is carried out at a temperature in the range 850°C-950°C.

11. A method of making planar optical devices comprising the steps of:
providing a substrate comprising an undercladding glass layer;
disposing on said undercladding layer, a particulate layer comprising particles of a glass having an index of refraction higher than that of said undercladding;
consolidating said particulate layer by sintering at a temperature in the range of T_{g} to T_{g} + 100°C for the particulate glass;
patterning the consolidated layer to define an optical waveguide core;
disposing on the patterned core a layer of glass having an index of refraction lower than the glass of the core.

## Patentansprüche

1. Verfahren zur Herstellung eines planaren optischen Bauelementes mit folgenden Verfahrensschritten:
Bereitstellen eines Substrates (10);
Aufbringen einer als untere Mantelschicht wirkenden Glasschicht auf das Substrat (10);
Aufbringen einer aus Glas bestehenden Partikelschicht (13) auf die untere Mantelschicht, deren Brechungsindex größer ist als der Brechungsindex der unteren Mantelschicht;
Verfestigen der Partikelschicht durch viskoses Sintern; Strukturieren der verfestigten Schicht zum Defininieren eines Wellenleiterkerns, und
Aufbringen einer als obere Mantelschicht oder als Deckschicht wirkenden Glasschicht (16) auf den strukturierten Kern, deren Brechungsindex niedriger als der Brechungsindex des Kerns ist.

2. Verfahren nach Anspruch 1,
wobei die untere Mantelschicht durch Abscheiden einer aus Glaspartikeln bestehenden Schicht und Verfestigen der als untere Mantelschicht wirkenden Partikelschicht durch viskoses Sintern auf das Substrat aufgebracht wird.

3. Verfahren nach Anspruch 1,
wobei die Partikelschicht dadurch auf die untere Mantelschicht aufgebracht wird, daß die untere Mantelschicht mit einer Aufschlämmung oder einem Brei in Kontakt gebracht wird, der Glaspartikel umfaßt.

4. Verfahren nach Anspruch 1,
wobei die Partikelschicht durch Zentrifugieren oder Schleudern auf die untere Mantelschicht aufgebracht wird.

5. Verfahren nach Anspruch 1,
wobei die Partikelschicht durch Elektrophorese auf die untere Mantelschicht aufgebracht wird.

6. Verfahren nach Anspruch 1,
wobei die Partikelschicht aus einem Glas mit einer charakteristischen Temperatur T_{G} besteht und wobei das Sintern in dem Temperaturbereich zwischen T_{G} und T_{G} + 100 °C durchgeführt wird.

7. Verfahren nach Anspruch 1,
wobei das Substrat Silicium umfaßt;
wobei die untere Mantelschicht kieselsäurereiches oder quarzähnliches Glas umfaßt;
wobei der Kern Natriumborosilikatglas umfaßt; und
wobei die Deckschicht kieselsäurehaltiges oder quarzähnliches Glas umfaßt.

8. Verfahren nach Anspruch 1,
wobei die Deckschicht dadurch auf den strukturierten Kern aufgebracht wird, daß der strukturierte Kern mit einer Aufschlämmung oder einem Brei in Kontakt gebracht wird, der Glaspartikel umfaßt.

9. Verfahren nach Anspruch 1,
wobei die Partikelschicht hauptsächlich Glaspartikel mit einem Durchmesser von weniger als einem Mikrometer umfaßt.

10. Verfahren nach Anspruch 1,
wobei das Substrat einen Siliciumeinkristall umfaßt,
wobei die untere Mantelschicht aus Glas durch Aufwachsenlassen eines kieselsäurereichen oder quarzähnlichen Glases auf das Substrat aufgebracht wird,
wobei die Partikelschicht hauptsächlich Partikel aus Natriumborosilikatglas mit einem Durchmesser von weniger als einem Mikrometer umfaßt und wobei das viskose Sintern bei einer Temperatur zwischen 850 und 950 °C durchgeführt wird.

11. Verfahren zur Herstellung eines planaren optischen Bauelementes mit folgenden Verfahrensschritten:
Bereitstellen eines Substrates, das eine untere Mantelschicht aus Glas umfaßt;
Aufbringen einer Partikelschicht auf die untere Mantelschicht, wobei die Partikelschicht Glaspartikel umfaßt, deren Brechungsindex höher ist als der Brechungsindex der unteren Mantelschicht; Verfestigen der Partikelschicht durch Sintern bei einer Temperatur, die zwischen T_{G} und T_{G} + 100 °C für die Glaspartikel liegt;
Strukturieren der verfestigten Schicht zum Definieren eines Wellenleiterkerns; und
Aufbringen einer Glasschicht auf den strukturierten Kern, deren Brechungsindex niedriger ist als der Brechungsindex des Glaskerns.

## Revendications

1. Procédé de fabrication d'un dispositif optique planar comportant les étapes qui consistent à
prendre un substrat (10),
déposer sur le substrat une couche de verre qui agit comme gaine sous-jacente ;
disposer sur la couche de gaine sous-jacente une couche (13) de particules de verre ayant un indice de réfraction supérieur à celui de la gaine sous-jacente ;
consolider la couche de particules par frittage visqueux ;
configurer la couche consolidée pour définir un coeur de guide d'ondes optique ;
disposer sur le coeur configuré une couche de verre (16) agissant comme gaine sur-jacente ayant un indice de réfraction inférieur à celui du coeur.

2. Procédé suivant la revendication 1 dans lequel la gaine sous-jacente est disposée sur le substrat en déposant une couche de particules de verre et en consolidant la couche de particules formant gaine sous-jacente par frittage visqueux.

3. Procédé suivant la revendication 1, dans lequel la couche de particules est disposée sur la gaine sous-jacente en mettant en contact la gaine sous-jacente avec une suspension contenant des particules de verre.

4. Procédé suivant le revendication 1, dans lequel la couche de particules est disposée sur la gaine sous-jacente par centrifugation.

5. Procédé suivant la revendication 1, dans lequel la couche de particules est disposée sur la gaine sous-jacente par électrophorèse.

6. Procédé suivant la revendication 1, dans lequel la couche de particules est un verre ayant une température T_{G} caractéristique et le frittage est effectué à une température dans la gamme comprise entre T_{G} et T_{G} + 100°.

7. Procédé suivant la revendication 1, dans lequel :
le substrat est constitué de silicium ;
la gaine sous-jacente est du verre de silice élevée ;
le coeur est constitué de verre de borosilicate de sodium ; et
la gaine sur-jacente est constituée de verre de silice élevée.

8. Procédé suivant la revendication 1, dans lequel la gaine sur-jacente est disposée sur le coeur configuré en mettant en contact le coeur configuré avec une suspension contenant des particules de verre.

9. Procédé suivant la revendication 1, dans lequel la couche de particules comporte de manière prédominante des particules de verre ayant des diamètres inférieurs à 1 µ.

10. Procédé suivant la revendication 1, dans lequel le substrat est constitué de silicium monocristallin, la couche de verre de gaine sous-jacente est formée en faisant croître une couche de verre de silice élevée sur le substrat, la couche de particules étant constituée de manière prédominante de particules de verre de borosilicate de sodium ayant des diamètres inférieurs à 1 µ, et l'étape de frittage visqueux est réalisée à une température comprise dans la gamme entre 850° et 950°C.

11. Procédé de fabrication de dispositif optique planar comportant les étapes qui consistent à :
prendre un substrat constitué d'une couche de verre de gaine sous-jacente ;
disposer sur la couche de gaine sous-jacente une couche de particules comportant des particules d'un verre ayant un indice de réfraction supérieur à celui de la gaine sous-jacente ;
consolider la couche de particules par frittage à une température comprise dans la gamme de T_{G} à T_{G} + 100°C pour le verre de particules ;
configurer la couche consolidée pour définir un coeur de guide d'ondes optiques ;
disposer sur le coeur configuré une couche de verre ayant un indice de réfraction inférieur au verre du coeur.
